# EUROPÄISCHE PATENTANMELDUNG

(11) **EP 1 512 855 A1**
(43) Veröffentlichungstag der Anmeldung: **09.03.2005**
(21) Anmeldenummer: 03103569.4
(22) Anmeldetag: 26.09.2003
(51) Int. Cl.: F02C 7/00, F01K 13/00, F01N 3/22

(54) **Kraftwerksanlage, und Verfahren zum Betrieb**

(30) Priorität: 04.09.2003 EP 03103298
(71) Anmelder: ALSTOM Technology Ltd, 5400 Baden (CH)
(72) Erfinder: Althaus, Rolf, 9230, Flawil (CH)

(57) **Zusammenfassung**

Eine Kraftwerksanlage umfasst eine Gasturbogruppe (1) mit einem stromab der Turbine (103) im Rauchgaspfad der Gasturbogruppe angeordneten Wärmeübertragungsapparat (202), beispielsweise einem Rekuperator zur Vorwärmung der Verbrennungsluft. Ein Rauchgasreinigungskatalysator (205) ist stromab wenigstens eines Teils des Wärmeübertragungsapparates angeordnet, an einer Stelle, an der das Rauchgas durch den Wärmetausch bereits soweit abgekühlt ist, dass eine irreversible Beschädigung des Katalysators durch Überhitzung vermieden wird. Andererseits ist die Stelle sogewählt, dass eine zur Aufrechterhaltung der katalytischen Rauchgasreinigung notwendige Temperatur gewährleistet ist. In einer bevorzugten Ausführungsform ist eine Temperaturmesstelle (10) angeordnet, an welcher die Temperatur des Katalysators oder des dem Katalysator zuströmenden Rauchgases bestimmt wird, damit diese Temperatur durch geeignete Regeleingriffe geregelt werden kann.

## Beschreibung

### Technisches Gebiet

Die vorliegende Erfindung betrifft eine Kraftwerksanlage gemäss dem Oberbegriff des Anspruchs 1. Sie betrifft weiterhin ein bevorzugtes Verfahren zum Betrieb einer erfindungsgemässen Kraftwerksanlage.

### Stand der Technik

Im Rahmen der Einhaltung strengster Emissionsnormen ist die Anwendung der katalytischen Abgasreinigung bekannt. Abgasreinigungskatalysatoren weisen allerdings ein vergleichsweise enges Temperaturfenster auf, in dem sie wirkungsvoll arbeiten. Beim Überschreiten eines oberen Temperaturgrenzwertes kommt es zu einer Schädigung des Katalysators. Unterhalb eines unteren Temperaturgrenzwertes nimmt die Rauchgasreinigungswirkung schnell ab, und kann schliesslich nicht mehr gewährleistet werden.

Gasturbogruppen hingegen weisen einen weiten Abgastemperaturbereich auf. Vom Teillastbereich bis hin zur Volllast ist es schlicht unmöglich, bei realistischen, einen vernünftige Wirkungsgrad- und Leistungsdaten gewährleistenden Prozessparametern die Abgastemperatur in einem der katalytischen Abgasreinigung zuträglichen Fenster von beispielsweise 250°C bis rund 300°C oder auch 350°C zu halten.

In Verbindung mit Gasturbogruppen findet die katalytische Rauchgasreinigung daher insbesondere in Verbindung mit einem im Rauchgaspfad angeordneten Abhitzedampferzeuger Anwendung, also primär in Verbindung mit Kombianlagen, STIG-Prozessen, oder Cogeneration-Anlagen. Der Katalysator wird dann innerhalb des Abhitzedampferzeugers beispielsweise im Bereich eines Verdampfers angeordnet, weil dort naturgemäss eine nur in engen Grenzen variable, im Wesentlichen durch den Druck des Wassers in der Verdampferberohrung vorgegebene Temperatur vorherrscht. Kombianlagen sind aber sehr teuer, und lohnen wirtschaftlich eigentlich nur für den Grundlastbetrieb, mit Betriebszeiten von zum Beispiel mehr als 6000 h/Jahr nahe der Volllast, beispielsweise bei mehr als 80% der Nennleistung. STIG-Prozesse verbrauchen sehr viel Wasser, welches noch dazu aufwändig aufbereitet werden muss. Cogeneration-Anlagen sind naturgemäss auf Nischenanwendungen beschränkt, weil ein Verbraucher für erzeugten Dampf in geeigneter örtlicher Nähe vorhanden sein muss.

Andernfalls müssen aufwändige spezifische Massnahmen getroffen werden, um die Gasturbinen-Rauchgase auf eine für den Katalysator erträgliche Temperatur einzustellen.

### Darstellung der Erfindung

Hier will die Erfindung Abhilfe schaffen. Der in den Ansprüchen gekennzeichneten Erfindung liegt die Aufgabe zugrunde, eine Kraftwerksanlage sowie ein Verfahren der eingangs genannten Art anzugeben, welches die Nachteile des Standes der Technik zu vermeiden vermag. Aufgabe der Erfindung ist es, eine Kraftwerksanlage anzugeben, welche einen Rauchgasreinigungs-Katalysator für die Rauchgase einer Gasturbogruppe aufweist, welche ohne einen aufwändigen Abhitzedampferzeuger oder sonstige aufwändige und hoch kapitalintensive spezielle Massnahmen zur Einstellung der Katalysatortemperatur auskommt. Aufgabe der Erfindung ist es damit weiterhin, eine Kraftwerksanlage mit einer Gasturbogruppe und einer katalytischen Abgasreinigung der Gasturbinenrauchgase anzugeben, welche auch für Spitzenlastanwendungen, bei geplanten jährlichen Betriebszeiten von unter 2000 Stunden und sogar weniger als 500 Stunden wirtschaftlich zu installieren ist.

Erfindungsgemäss wird diese Aufgabe unter Verwendung der Gesamtheit der Merkmale des Anspruchs 1 gelöst, und weiterhin unter Verwendung eines Verfahrens gemäss dem Verfahrensanspruch.

Kern der Erfindung ist es also, im Rauchgaspfad einen Wärmeübertragungsapparat anzuordnen, der primärseitig von den Rauchgasen der Gasturbogruppe durchströmbar ist, und welcher sekundärseitig von einem gasförmigen Arbeitsfluid eines Wärme-Kraftprozesses durchströmbar ist, und den Katalysator stromab eines ersten Teils des Wärmeübertragungsapparates und weiterhin bevorzugt stromauf eines zweiten Teils des Wärmeübertragungsapparates anzuordnen. Beim Durchströmen des Wärmeübertragungsapparates wird das Rauchgas der Gasturbogruppe im Wärmetausch mit dem sekundärseitig strömenden Fluid abgekühlt, und das sekundärseitig strömende Fluid wird im Wärmetausch mit dem Rauchgas erwärmt. Dabei wird die graduelle Abkühlung des Rauchgases beim Durchströmen des Wärmeübertragungsapparates ausgenutzt, und der Katalysator an einer Stelle angeordnet, an der die Temperatur des Rauchgases auf einen dem Betrieb des Katalysators zugänglichen Wert abgefallen ist. Der Katalysator wird also an einer Stelle angeordnet, an der die Rauchgastemperatur in einem katalysatorspezifischen Temperaturfenster liegt; bei den heute üblichen Katalysatormaterialien sind insbesondere Temperaturen von rund 250°C bis 300°C oder auch bis rund 350°C zu bevorzugen.

In einer Ausführungsform ist der Wärmeübertragungsapparat in zwei in Serie durchströmte eigenständige Einheiten unterteilt, zwischen denen der Katalysator angeordnet ist.

Unter einem gasförmigen Arbeitsfluid ist in diesem Rahmen das Arbeitsfluid eines Wärmekraftprozesses zu verstehen, welcher ohne Phasenwechsel des Arbeitsfluides abläuft.

In einer ersten Ausführungsform der Erfindung ist der Wärmeübertragungsapparat ein Rekuperator einer Gasturbogruppe mit Luftvorwärmung. Der Wärmeübertragungsapparat wird primärseitig vom Rauchgas der Gasturbogruppe durchströmt, und sekundärseitig bevorzugt im Gegenstrom von der vom Verdichter kommenden Verbrennungsluft durchströmt, die sich im Wärmetausch mit den Rauchgasen erwärmt, bevor sie zur Verbrennung eines Brennstoffs in die Brennkammer geleitet wird; auf an sich bekannte Weise wird das entstehende Rauchgas in der Turbine entspannt und durch den primärseitigen Strömungsweg des Wärmeübertragungsapparates geleitet. Dem Fachmann ist die Tatsache wohlbekannt, dass die Luftvorwärmung einer Gasturbogruppe bevorzugt bei vergleichsweise geringen Druckverhältnissen und damit verbundenen moderaten Verdichterendtemperaturen Verwendung findet, und/oder dann, wenn die Verdichterendtemperatur durch Zwischenkühlung im Verdichter oder die Verwendung der beispielsweise in FR 1,563,749 vorgeschlagenen Flüssigkeitseindüsung in der Verdichter entsprechend niedrig ist. Häufig kann in diesen Fällen einfach aufgrund der thermodynamischen Gesetzmässigkeiten eine Verdichterendtemperatur gewährleistet werden, welche mit einer zulässigen und hinreichenden Katalysator-Eintrittstemperatur des Rauchgases kompatibel ist. der Rekuperator ist dann derart zu dimensionieren, dass das Rauchgas im Wesentlichen bis zur Verdichterendtemperatur abgekühlt wird; der Katalysator wird in diesem Falle im primärseitigen Strömungsweg des Wärmeübertragungsapparates am stromabwärtigen Ende des Wärmeübertragungsapparates oder stromab davon angeordnet. Stromab des Katalysators können weitere Wärmeübertragungsmittel zur Nutzung der verbleibenden Rauchgaswärme angeordnet sein.
In einer weiteren Ausgestaltung dieser Lösung sind Mittel zur Bestimmung der Rauchgastemperatur am Katalysatoreintritt oder der Katalysatortemperatur angeordnet. Innerhalb gewisser Grenzen kann diese Temperatur durch die Verstellung einer verstellbaren Verdichter-Vorleitreihe und gegebenenfalls durch eine stromab der Turbine und stromauf des Rekuperators angeordnete Zusatzfeuerung geregelt werden.

In einer weiteren bevorzugten Ausführungsform der Erfindung ist der Wärmeübertragungsapparat ein Erhitzer einer Druckspeicheranlage, insbesondere einer Luftspeicheranlage. Die Druckspeicheranlage umfasst dabei einen Druckspeicher für ein Speicherfluid und eine Speicherfluid-Expansionskraftmaschine, insbesondere eine Expansionsturbine, über welche im Druckspeicher gespeichertes komprimiertes gasförmiges Speicherfluid, insbesondere Druckluft arbeitsleistend entspannt werden kann. Dabei gewährleistet eine Erwärmung des Speicherfluides vorgängig der Entspannung eine grösseres über die Expansionsmaschine zur Verfügung stehendes spezifisches Enthalpiegefälle, und damit eine bessere Ausnutzung des gespeicherten Fluides. In einer Vorzugsvariante erfolgt die Vorwärmung durch indirekten Wärmetausch, weil in diesem Falle die Expansionsturbine nicht mit aggressiven Rauchgasen beaufschlagt wird. Aufgrund der niedrigen Ausgangstemperatur des Speicherfluides aus dem Druckspeicher eignet sich eine Druckspeicheranlage ganz besonders zur Ausnutzung auf niedrigem Temperaturniveau anfallender Wärme, und ermöglicht daher eine sehr gute Ausnutzung der Abgaswärme der Gasturbogruppe. Wenn alleine diese Abwärme genutzt wird, so bleibt die Temperatur des Speicherfluides am Eintritt der Speicherfluid-Expansionsmaschine im Allgemeinen deutlich unter 600°C begrenzt. Es ist dann beispielsweise möglich, eine Standard-Dampfturbine als Druckspeicher-Expansionsmaschine zu verwenden.

Aus wirtschaftlichen Überlegungen ist es daher- unabhängig von der verwendeten Wärmequelle - häufig eine bevorzugte Ausführungsform, das Speicherfluid indirekt im Wärmetausch zu beheizen, und die Speicherfluidtemperatur auf einen zulässigen Maximalwert zu begrenzen, damit Expansionsmaschinen verwendet werden können, welche auf Kühlung, hochtemperaturfeste Materialien, und Schutzmassnahmen gegen aggressive Heissgaseinwirkung verzichten.
In der beschriebenen Verbindung mit der Luftspeicheranlage wird der Katalysator im Rauchgaspfad der Gasturbogruppe innerhalb des Wärmeübertragungsapparates, stromab eines ersten Teils des Wärmeübertragungsapparates und stromauf eines zweiten Teils des Wärmeübertragungsapparates, angeordnet. Die Anordnung erfolgt an einer Stelle, bei der bei nominellem Betrieb der Kraftwerksanlage ein günstiges Temperaturfenster zu erwarten ist.

Damit dieses gewährleistet werden kann, werden gemäss einer bevorzugten Variante Mittel vorgesehen um die Temperatur des Rauchgases im Wesentlichen unmittelbar stromauf des Katalysators oder unmittelbar die Katalysatortemperatur zu messen und bevorzugt zu regeln. In einer Ausführungsform der Erfindung wird der aus dem Druckluftspeicher entnommene Massenstrom so gesteuert, dass diese Temperatur auf einen Sollwert eingeregelt wird, oder innerhalb eines Sollwertintervalls geregelt wird. Die Regelung kann beispielsweise durch einen stetigen Regler oder durch einen Zweipunktregler, auch im Sinne einer Grenzregelung, erfolgen. Der verwendete Temperaturregler ist mit der Temperatur als Regelgrösse und der Stellung eines Absperr- und/oder Drosselorgans für das Speicherfluid als Stellgrösse beschaltet.
Eine Messung und Überwachung der Katalysatoreintrittstemperatur ist auch bei anderen Betriebsverfahren von Vorteil, um beim Über- oder Unterschreiten zulässiger Limiten Abfangaktionen auszulösen, welche beispielsweise eine irreversible Schädigung des Katalysators zu vermeiden vermögen.

In einer weiteren Ausführungsform der Erfindung ist im Rauchgaspfad stromab des Wärmeübertragungsapparates eine Temperaturmessstelle angeordnet. Die dort gemessene Temperatur des Abgases wird in einer bevorzugten Betriebsweise als Regelgrösse für einen Temperaturregler verwendet, welcher durch Eingriffe auf das Drosselorgan den Fluidmassenstrom so verändert, dass die gemessene Abgastemperatur auf einem Sollwert oder in einem Sollwertintervall bleibt. Beispielsweise wird die Abgastemperatur so eingeregelt, dass sie um eine Sicherheitsmarge über einer Taupunktstemperatur liegt; dies ermöglicht eine bestmögliche Ausnutzung der Abwärmepotenziale bei gleichzeitiger Sicherheit gegen Taupunktsunterschreitungen des Abgases. Dabei ist es selbstverständlich von Vorteil, die Katalysatortemperatur im Sinne der oben gemachten Ausführungen ebenfalls auf geeignete Weise zu überwachen, und wenigstens im Sinne einer Grenzregelung zu regeln.
Auch bei anderen Betriebsmodi ist es von Vorteil, die Abgastemperatur stromab des Wärmeübertragungsapparates zu messen, und diese in eine Sicherheitslogik der Anlagensteuerung mit einfliessen zu lassen, derart, dass bei Unterschreiten eines Mindestwertes, der brennstoffabhängig vorgegeben sein kann, entsprechende Sicherheitsmassnahmen auszulösen, damit eine Unterschreitung des Taupunktes von Rauchgaskomponenten vermieden wird, welche andernfalls zu schwerwiegenden Korrosionsschäden führen würde.

In einer Weiterbildung der Kraftwerksanlage ist im Rauchgaspfad der Gasturbogruppe stromauf des Wärmeübertragungsapparates, eine Wärmezuführeinrichtung, insbesondere eine Zusatzfeuerung, angeordnet. Damit kann einerseits die dem Luftspeicherprozess zur Verfügung stehende Wärme höchst wirkungsvoll von der Leistung der Gasturbogruppe entkoppelt werden. Hierzu ist ein Leistungsregler der Speicherfluid-Expansionsmaschine mit der Nutzleistung der Druckspeicher-Expansionsmaschine als Regelgrösse und der Stellung eines Brennstoffmassenstrom-Stellorgans der Wärmezuführeinrichtung als Stellgrösse beschaltet. Bevorzugt wird gleichzeitig in der oben beschriebenen Weise das Stellorgan für den Speicherfluid-Massenstrom von einem Temperaturregler zur Regelung und/oder Begrenzung der Katalysator- und/oder Abgastemperatur angesteuert.

In einer weiteren Ausgestaltung der Erfindung sind in Verbindung mit dieser Wärmezuführeinrichtung Mittel zur Bestimmung der Katalysatortemperatur und/oder der Rauchgastemperatur im Wesentlichen unmittelbar stromauf des Katalysators, beispielsweise am Katalysatoreintritt angeordnet; ein Temperaturregler ist mit der dort gemessenen Temperatur als Regelgrösse und der Stellung eines Brennstoffmassenstrom-Stellorgans der Wärmezuführvorrichtung als Stellgrösse beschaltet. Die Zusatzwärmezufuhr zum Rauchgas wird also in Abhängigkeit von der Katalysatortemperatur gesteuert, um diesen auf einem Sollwert oder innerhalb eines Sollwertintervalls einzuregeln. Diese Regelung kann auch als Grenzregelung verwendet werden, um ein Über- oder Unterschreiten von zulässigen Temperaturlimiten des Katalysators zu vermeiden.
In Verbindung hiermit können in vorteilhafter Weise sowohl die Katalysatortemperatur als auch die Abgastemperatur im Rauchgaspfad stromab des Wärmeübertragungsapparates unabhängig voneinander geregelt werden. Dabei wird bevorzugt das Speicherfluidmassenstrom-Stellorgan wie oben beschrieben in Abhängigkeit von der Abgastemperatur angesteuert. Das Brennstoffmassenstrom-Stellorgan für die Wärmezuführeinrichtung wird wie voranstehend beschrieben zur Regelung der Katalysatortemperatur gesteuert.

Alternativ ist es auch möglich, den Speicherfluid-Massenstrom über den Leistungsregler in Abhängigkeit von der Leistung der Speicherfluid-Entspannungsmaschine und gleichzeitig die zusätzliche Wärmezufuhr zum Rauchgas, insbesondere eine Feuerungsleistung, in Abhängigkeit von der Katalysatoreintrittstemperatur oder der Abgastemperatur über einen Temperaturregler zu steuern.

In einer weiteren Ausgestaltung wird die Temperatur des Speicherfluids stromab des Wärmeübertragungsapparates bestimmt, beispielsweise durch eine Messung im Speicherfluid-Strömungsweg, oder es kann äquivalent auch, was in der Dampfturbinentechnik wohlbekannt ist, die Flanschtemperatur des Eintrittsflansches der Speicherfluid-Expansionsmaschine gemessen werden. Ein Temperaturregler wird mit der gemessenen Temperatur als Regelgrösse und mit der Stellung des Brennstoffmassenstrom-Stellventils der Wärmezuführeinrichtung als Stellgrösse beschaltet. Auf diese Weise wird die Temperatur des Speicherfluides auf einen Sollwert oder innerhalb eines Sollwertintervalls eingeregelt. Alternativ ist es in jedem Fall von Vorteil, wenn auf geeignete Weise eine Grenzregelung dieser Temperatur implementiert ist, um die Einhaltung einer zulässigen Maximaltemperatur zu gewährleisten.

In einer weiteren Ausgestaltung der erfindungsgemässen Kraftwerksanlage ist im Speicherfluid-Strömungsweg stromab des Wärmeübertragungsapparates und stromauf der Speicherfluid-Expansionsmaschine eine weitere Speicherfluid-Wärmezuführvorrichtung angeordnet. Diese ist bevorzugt als indirekte Feuerung mit einem Wärmetauscher ausgeführt, damit eine Beaufschlagung der Speicherfluid-Expansionsmaschine mit aggressiven Verbrennungsgasen vermieden wird. Prinzipiell ist aber auch die Anordnung einer Feuerungseinrichtung unmittelbar im Speicherfluid-Strömungsweg stromab des Wärmeübertragungsapparates möglich, was selbstverständlich billiger als ein Wärmetauscher zu realisieren ist, und geringere Druckverluste verursacht. In einer Ausgestaltung ist ein Leistungsregler der Speicherfluid-Expansionsmaschine mit der Stellung eines Brennstoffmassenstrom-Stellorgans der weiteren Speicherfluid-Wärmezuführeinrichtung beschaltet. Das heisst, die zusätzliche Wärmezufuhr wird in Abhängigkeit von der Nutzleistung der Speicherfluid-Expansionsmaschine oder einer Regelabweichung dieser Nutzleistung gesteuert. In einer anderen Ausgestaltung sind Mittel zur Bestimmung der Temperatur des Speicherfluides am Eintritt in die Speicherfluid-Expansionsmaschine oder zur Bestimmung der Temperatur des Eintrittsflansches der Speicherfluid-Expansionsmaschine angeordnet; ein Temperaturregler ist mit dieser Temperatur als Regelgrösse und der Stellung des Brennstoffmassenstrom-Stellorgans der weiteren Wärmezuführeinrichtung als Stellgrösse beschaltet, derart, dass durch eine Verstellung dieses Brennstoffmassenstrom-Stellorgans diese Temperatur auf einen Sollwert oder innerhalb eines Sollwertbereichs eingeregelt wird.

Die beschriebenen Regelverfahren können selbstverständlich untereinander kombiniert werden. Bei einer erfindungsgemässen Kraftwerksanlage mit einer Druckspeicheranlage, welche sowohl eine Wärmezuführvorrichtung für das Rauchgas als auch eine weitere Speicherfluid-Wärmezuführeinrichtung aufweist, können sowohl die Temperatur des Speicherfluids am Eintritt der Expansionsmaschine als auch die Abgastemperatur des Rauchgases stromab des Wärmeübertragungsapparates als auch die Katalysatortemperatur unabhängig voneinander geregelt werden.
Wenn keine Zusatzfeuerung oder sonstige Wärmezuführeinrichtungen angeordnet sind, wird bevorzugt die Katalysatortemperatur durch Eingriffe auf das Stellorgan für den Speicherfluid-Massenstrom geregelt, wobei vorteilhaft Massnahmen ergriffen werden um die Rauchgastemperatur stromab des Wärmeübertragungsapparates zuverlässig oberhalb des Taupunktes von Rauchgaskomponenten zu halten. Wenn eine Wärmezuführeinrichtung für das Rauchgas stromauf des Wärmeübertragungsapparates angeordnet ist, wird bevorzugt die Katalysatortemperatur durch Eingriffe auf das Stellorgan für dessen Brennstoffmassenstrom geregelt, und die Rauchgastemperatur stromab des Wärmeübertragungsapparates wird bevorzugt durch Eingriffe auf das Stellorgan für den Speicherfluid-Massenstrom geregelt, wobei vorteilhaft Massnahmen ergriffen werden, um die Temperatur des Speicherfluides beim Eintritt in die Speicherfluid-Expansionsmaschine zuverlässig auf einen Maximalwert zu begrenzen. Wenn weiterhin auch eine weitere Speicherfluid-Wärmezuführeinrichtung angeordnet ist, wird bevorzugt zusätzlich die Temperatur des Speicherfluides beim Eintritt in die Speicherfluid-Expansionsmaschine durch Eingriffe auf das Brennstoffmassenstrom-Stellorgan der weiteren Speicherfluid-Wärmezuführeinrichtung geregelt.

In einer Fortführung der Erfindung ist eine Leitung angeordnet, über die Fluid vom Druckluftspeicher zur Gasturbogruppe leitbar ist, und welche stromab des Verdichters und stromauf der Brennkammer im Strömungsweg der Gasturbogruppe mündet. Damit kann dem Gasturbinenprozess Fluid zur Verbrennung und Entspannung zur Verfügung gestellt werden, welches nicht gleichzeitig verdichtet werden muss. Dies ermöglicht eine weitere Leistungssteigerung der Kraftwerksanlage, weil ja entweder ein geringerer Luftmassenstrom arbeitsaufwändig im Verdichter der Gasturbogruppe verdichtet werden muss, als zur Verbrennung und Entspannung zur Verfügung steht, oder der Turbinenmassenstrom über den maximalen Verdichtermassenstrom angehoben werden kann, woraus über den erhöhten Rauchgasmassenstrom zusätzlich ein höheres Abwärmepotenzial zur Nutzung im Druckspeicherprozess zur Verfügung steht. Das der Gasturbogruppe zugeführte Fluid wird mit Vorteil innerhalb des Wärmeübertragungsapparates, stromab des Wärmeübertragungsapparates, oder in teilentspannter Form während des Entspannungsvorgangs des Druckspeicherprozesses entnommen. Es ist von Vorteil, wenn die Entnahmestelle so angeordnet ist, dass die Entnahmetemperatur wenigstens näherungsweise der Temperatur am Verdichteraustritt der Gasturbogruppe entspricht; dies vermeidet übergrosse Mischungsverluste. Es ist weiterhin von Vorteil, wenn der Entnahmedruck wenigstens näherungsweise dem Verdichterenddruck entspricht und gering darüber liegt; dies vermeidet unnötig hohe Drosselungsverluste.

Die Ladeverdichter zur Aufladung des Druckluftspeichers sind bevorzugt entweder unabhängig von den Krafterzeugungskomponenten mit eigenen Antriebsmotoren angeordnet, was eine maximal flexible Betriebsweise erlaubt. In einer anderen bevorzugten Ausführungsform sind die Ladeverdichter mit dem Wellenstrang der Gasturbogruppe koppelbar. Dazu ist in einer ersten Ausführungsform ein Generator fest mit der Gasturbogruppe gekoppelt. Der Generator weist ein zweites Wellenende auf, welches auf die Verdichter zur Aufladung des Druckluftspeichers aufschaltbar ist. Die Wellenleistung der Gasturbogruppe kann durch eine Verstellung der Erregung des Generators und des Betriebspunktes des Ladeverdichters variabel zwischen diesen beiden Leistungsverbrauchern aufgeteilt werden. Dabei kann auch die Phase des Generators im Sinne einer Blindleistungsregelung sehr flexibel verändert werden. In einer weiteren Ausführungsform ist der Generator derart ausgeführt, dass er auch elektromotorisch betreibbar ist. In einer dritten Ausführungsform ist zwischen dem Generator und der Gasturbogruppe eine schaltbare Kupplung angeordnet, derart, dass der Generator zum alleinigen Antrieb der Ladeverdichter motorisch betrieben werden kann, während die Gasturbogruppe steht.

In einer Ausführungsform der Erfindung, wobei die Kraftwerksanlage eine Druckspeicheranlage umfasst, ist die Gasturbogruppe mit einem Generator verbunden, der auf einem zweiten Wellenende eine selbsttätig wirkende Kupplung trägt, über welche die Expansionsmaschine ebenfalls auf den Generator aufschaltbar ist. Diese Anordnung, bei der eine Gasturbogruppe und eine zweite Kraftmaschine einen gemeinsamen Generator antreiben, ist von Kombianlagen bekannt, bei denen eine Dampfturbine über eine selbsttätige Kupplung auf einen mit der Gasturbogruppe gemeinsamen Generator mechanisch aufschaltbar ist. Diese Bauweise kann auch bei einer Kraftwerksanlage, welche eine Gasturbogruppe und einen Expander für ein Speicherfluid aufweist, vorteilhaft Anwendung finden. Die Gasturbogruppe und der Generator sind wie erwähnt fest verbunden, während die selbsttätige Kupplung derart wirkt, dass sie, sofern die Drehzahl der expanderseitigen Antriebswelle unter der des Generators liegt, eine Freilauffunktion aufweist, und erst, wenn die Drehzahlen gleich sind, ein Moment übertragen wird.

### Kurze Beschreibung der Zeichnung

Die Erfindung wird nachfolgend anhand von in der Zeichnung illustrierten Ausführungsbeispielen näher erläutert. Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

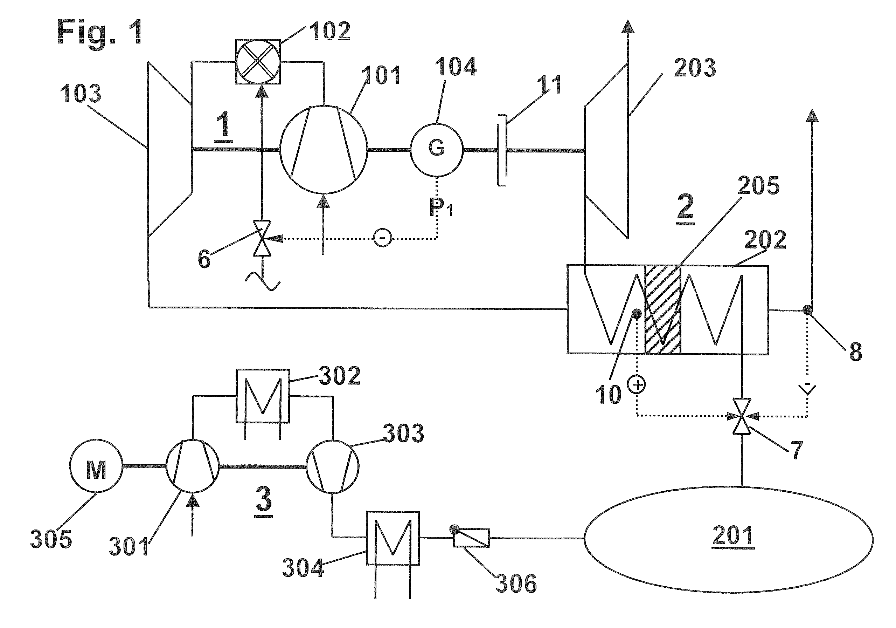

Eine erste Ausführungsform der Erfindung ist in Figur 1 dargestellt. Die Kraftwerksanlage umfasst eine Gasturbogruppe 1, eine Speicheranlage 2, sowie eine Aufladeeinheit 3. Die schematisch dargestellte Gasturbogruppe 1 umfasst einen Verdichter 101, eine Brennkammer 102, eine Turbine 103, sowie einen Generator 104. Der Generator kann häufig auch als Startvorrichtung für die Gasturbogruppe motorisch betrieben werden. Die Gasturbogruppe ist eine beliebige Gasturbogruppe, wie sie am Markt erhältlich ist, was auch die Möglichkeit mehrwelliger Installationen oder von Gasturbogruppen mit sequentieller Verbrennung, also mit zwei strömungsmässig in Serie geschalteten Turbinen und einer dazwischen angeordneten Brennkammer, einschliesst. Eine solche Gasturbogruppe ist aus EP 620 362 bekanntgeworden. Ebenso kann auch ein Getriebe zwischen der Abtriebswelle der Gasturbogruppe und dem Generator angeordnet sein; die dargestellte Bauart der Gasturbogruppe ist nicht einschränkend zu verstehen. Auf an sich bekannte Weise wird Umgebungsluft im Verdichter 101 verdichtet, der verdichteten Luft in der Brennkammer 102 Wärme zugeführt, und das entstehende gespannte Heissgas in der Turbine 103 unter Abgabe einer Leistung entspannt. Das entspannte Rauchgas stromab der Turbine weist eine Temperatur auf, welche durchaus deutlich über 550°C betragen kann, und die über den Leistungsbereich der Gasturbogruppe erheblich schwanken kann. Es ist daher an sich unmöglich, ohne weitere Vorkehrungen einen Abgasreinigungskatalysator unmittelbar im Rauchgaspfad der Gasturbogruppe anzuordnen. Die Turbine treibt den Verdichter 101 sowie den Generator 104 an. Der Generator 104 erzeugt eine Nutzleistung P₁, welche erfasst und zur Leistungsregelung der Gasturbogruppe herangezogen wird, was sehr vereinfacht dargestellt ist. Wenn die Leistung als Regelgrösse sinkt, wird das Brennstoffmassenstrom-Stellorgan 6 geöffnet. Eine solche Leistungsregelung umfasst selbstverständlich noch Soll-Istwert-Vergleiche, Begrenzer für Temperaturen und Drücke, und vieles mehr, was aber dem Fachmann geläufig ist und daher im Sinne der Übersichtlichkeit nicht dargestellt wurde. Weiterhin umfasst die dargestellte Kraftwerksanlage eine Speicheranlage 2, deren Kernelemente der Druckspeicher 201 und die Speicherfluid-Entspannungskraftmaschine 203 darstellen. Die Speicherfluid-Entspannungsmaschine ist vorliegend als Turbine dargestellt; grundsätzlich könnte hier auch ein Schraubenexpander oder dergleichen Anwendung finden. Als Speicherfluid-Entspannungsturbine kann beispielsweise eine marktgängige Serien-Dampfturbine verwendet werden, welche nur geringe Modifikationen erfordert; das durchströmende Druckspeicherfluid ist dann im Sinne einer hohen Lebensdauer bevorzugt Luft oder ein anderes nicht aggressives Gas, bei Eintrittstemperaturen von maximal rund 550°C bis 650°C. Der Druckspeicher kann auf an sich bekannte Weise mit komprimierter Luft aufgeladen werden, was bevorzugt zu Zeiten niedrigen Elektrizitätsbedarfs und niedriger Strommarktpreise geschieht. Im Beispiel ist eine Ladeeinheit 3 dargestellt, welche einen ersten Kompressor 301, einen Zwischenkühler mit Entfeuchter 302, einen zweiten Kompressor 303, sowie einen zweiten Luftkühler/Entfeuchter 304 enthält. Der Antrieb erfolgt durch den Motor 305. Beim Betrieb der Verdichter wird komprimierte Luft in das Speichervolumen 201 gefördert; beim Stillstand der Ladeeinheit 3 verhindert ein Rückschlagorgan 306 ein Rückströmen der Luft. Ein Absperr- und/oder Drosselorgan 7 regelt die Abströmung von Speicherfluid aus dem Druckspeicher 201 zur Speicherfluid-Entspannungsturbine 203. Aus dem Druckspeicher abströmendes Fluid wird in der Turbine 203 unter Abgabe von Leistung entspannt. Die Abtriebswelle der Speicherfluid-Entspannungsturbine ist über eine selbsttätig wirkende Kupplung mit dem Generator 104 verbindbar. Sofern die Drehzahl des Generators höher ist, als die der von der Turbine 203 heranführenden Abtriebswelle, erfüllt die Kupplung 11 eine Freilauffunktion; wenn die Drehzahl der Abtriebswelle synchron ist, wird ein Moment von der Entspannungsturbine 203 auf den Generator 104 übertragen.

Selbstverständlich kann zwischen der Abtriebswelle und der Speicherfluid-Entspannungsturbine auch ein Getriebe angeordnet sein; insbesondere bei kleinen Baugrössen werden häufig Expansionsmaschinen verwendet, welche höher als der Generator drehen, und deren Drehzahl daher auf eine generatorsynchrone Drehzahl untersetzt werden muss. Im Speicherfluid-Strömungsweg zwischen dem Druckluftspeicher 201 und der Turbine 203 ist ein Wärmeübertragungsapparat 202 angeordnet, über den vorgängig der Entspannung in der Turbine 203 Wärme auf das Speicherfluid übertragen werden kann. Die niedrige Ausgangstemperatur aus dem Druckluftspeicher macht die Druckspeicheranlage sehr attraktiv zur Nutzung auf niedrigem Temperaturniveau anfallender Wärme, wie beispielsweise Solarwärme oder eben auch die Abwärme einer Gasturbogruppe, oder einer anderen Wärmekraftmaschine. Daher ist der Wärmeübertragungsapparat im Rauchgaspfad der Gasturbogruppe 1 angeordnet, und wird von diesem primärseitig durchströmt, während der Wärmeübertragungsapparat sekundärseitig im Gegenstrom zum Rauchgas von dem gespannten Fluid aus dem Druckspeicher durchströmt wird. Beim Durchströmen des Wärmeübertragungsapparates wird also das aus dem Druckluftspeicher abströmende Fluid unter Nutzung der Abwärme der Gasturbogruppe erwärmt, wohingegen die Rauchgase sich abkühlen. Eine beste Abwärmenutzung stellt sich ein, wenn die Rauchgase soweit als möglich abgekühlt werden, wobei eine Unterschreitung des Taupunktes der Rauchkomponenten vermieden werden soll; insbesondere bei der Verbrennung schwefelhaltiger Brennstoffe, wie Öl, können sonst schwerwiegende Korrosionsschäden die Folge sein. Beim Durchströmen des Wärmeübertragungsapparates 202 kühlt sich das Rauchgas graduell ab, und durchläuft stromab einer ersten Strömungsstrecke einen Temperaturbereich, der für den Betrieb eines Rauchgasreinigungskatalysators günstig ist. An einer entsprechenden Stelle des Wärmeübertragungsapparates, stromab eines ersten Teils des Wärmeübertragungsapparates und stromauf eines zweiten Teils des Wärmeübertragungsapparates, ist ein Rauchgasreinigungskatalysator 205 im Rauchgaspfad angeordnet. Die Wahl der Anordnung kann nach folgenden Kriterien erfolgen: Bei einer nominellen Auslegung der Kraftwerksanlage werden die Komponenten und Massenströme so dimensioniert, dass die Temperatur des Speicherfluids beim Austritt aus dem Wärmeübertragungsapparat nur wenig, beispielsweise 30°C, unter der Eintrittstemperatur des Rauchgases liegt. Andererseits soll sich das Rauchgas im Sinne einer besten Abgaswämeausnutzung bis möglichst nahe an den Taupunkt abkühlen. Daraus ergibt sich eine auslegungsgemässe Aufteilung des Temperaturgefälles entlang des Rauchgaspfades innerhalb des Wärmeübertragungsapparates. Somit kann ein Bereich innerhalb des Wärmeübertragungsapparates 202 ermittelt werden, in welchem unter Berücksichtigung möglicher Abweichungen vom Auslegungs-Betriebszustand der Katalysator 205 günstig angeordnet werden kann. Weiterhin ist innerhalb des Wärmeübertragungsapparates 202 eine Temperaturmessstelle 10 angeordnet, über welche die Rauchgastemperatur im Wesentlichen unmittelbar stromauf des Katalysators 205 oder die Materialtemperatur des Katalysators selbst ermittelt wird. Ein Temperaturregler ist mit der dort gemessenen Temperatur als Regelgrösse und der Stellung des Speicherfluid-Massenstromstellorgans 7 als Stellgrösse beschaltet. Wenn die gemessene Temperatur einen Sollwert oder einen oberen Schwellenwert überschreitet, wird das Stellorgan 7 weiter geöffnet, woraufhin der Massenstrom des Speicherfluides steigt. Aufgrund des erhöhten Massenstroms des wärmeaufnehmenden Fluides steigt das Temperaturgefälle des Rauchgases im ersten Teil des Wärmeübertragungsapparates, und die Temperatur an der Messstelle 10 sinkt. Wenn umgekehrt ein Sollwert oder ein unterer Schwellenwert unterschritten wird, wird das Stellorgan 7 weiter geschlossen, woraufhin der Massenstrom des Speicherfluides sinkt. Aufgrund des verminderten Massenstroms des wärmeaufnehmenden Fluides vermindert sich das Temperaturgefälle des Rauchgases im ersten Teil des Wärmeübertragungsapparates, und die Temperatur an der Messstelle 10 steigt. Somit kann die Katalysatortemperatur höchst effizient auf einen Sollwert oder innerhalb eines Sollwertbereiches eingeregelt werden. Die Veränderung des Speicherfluid-Massenstroms zieht selbstverständlich auch eine Änderung der Leistungsabgabe der Turbine 203 nach sich. Diese wird durch den Leistungsregler ausgeregelt, welche die Gesamtleistung des Generators 104 regelt und in Abhängigkeit von einer Regelabweichung der Leistung P₁ den Brennstoffmassenstrom zur Brennkammer 102 erhöht oder vermindert. Dieses hat selbstverständlich auch Auswirkungen auf die Temperatur und den Massenstrom des Rauchgases, und damit auf die Katalysatortemperatur, was aber durch den oben beschriebenen Temperaturregelkreis kompensiert wird; bei einer geeigneten Auslegung der Regelparameter stellt sich hier sehr schnell ein stabiler Zustand ein. Stromab des Wärmeübertragungsapparates 202 ist im Rauchgasströmungsweg weiterhin eine Temperaturmessstelle 8 zur Messung der Abgastemperatur angeordnet. Diese wird im Sinne einer Grenzregelung derart verwendet, dass das Stellorgan 7 geschlossen oder dessen Öffnung begrenzt wird, sobald ein unterer Temperaturgrenzwert unterschritten wird, bei dem mit der Kondensation aggressiver Rauchgaskomponenten gerechnet werden muss. Die entsprechende Interaktion mit der Regelung der Katalysatortemperatur muss durch eine geeignete Schutzlogik sichergestellt werden.
In einer weiteren, nicht dargestellten Betriebsvariante wird durch Eingriffe auf die Stellung des Speicherfluid-Massenstromstellorgans 7 die mit der Messstelle 8 bestimmte Abgastemperatur auf einen Sollwert oder innerhalb eines Sollwertintervalls geregelt, und die Einhaltung eines absolut zulässigen Temperaturfensters für die mit der Messstelle 10 bestimmte Katalysatortemperatur wird im Sinne einer Schutzschaltung überwacht.
Es ist zudem sehr vorteilhaft und dem Fachmann geläufig, wenn die Temperatur des Speicherfluides am Austritt aus dem Wärmeübertragungsapparat oder am Eintritt in die Speicherfluid-Entspannungsturbine 203, oder die Temperatur am Eintrittsflansch der Speicherfluid-Entspannungsturbine auf nicht dargestellte, dem Fachmann aber geläufige Art, überwacht wird, und beim Überschreiten eines zulässigen Maximums geeignete Massnahmen vorgenommen werden, um die Integrität der Turbine 203 nicht zu gefährden.
Die in Figur 1 dargestellte Kraftwerksanlage, bei der die Gasturbogruppe 1 und die Druckspeicheranlage 2 auf einen gemeinsamen Generator wirken, kann ganz besonders vorteilhaft vollkommen ohne von aussen zugeführte Fremdenergie angefahren werden, vorausgesetzt, der Druckspeicher 201 ist wenigstens teilweise geladen. Dazu kann das Drosselorgan 7 im vollkommenen Anlagenstillstand notfalls von Hand geöffnet werden. Druckspeicherfluid strömt durch die Speicherfluid-Expansionsmachine und treibt diese an. Dabei ist durch die selbsttätige Kupplung 11 die Momentenübertragung von der Speicherfluid-Expansionsmachine 203 zum Wellenstrang der Gasturbogruppe sichergestellt. Somit kann die Speicherfluid-Expansionsmaschine als Startvorrichtung für die Gasturbogruppe verwendet werden: Die Gasturbogruppe wird von der Expansionsturbine beschleunigt bis zur Zünddrehzahl, und dann weiter auf Nenndrehzahl beschleunigt, derart, dass die Gasturbogruppe in der Lage ist, den Generator wieder im Leistungsbetrieb anzutreiben.

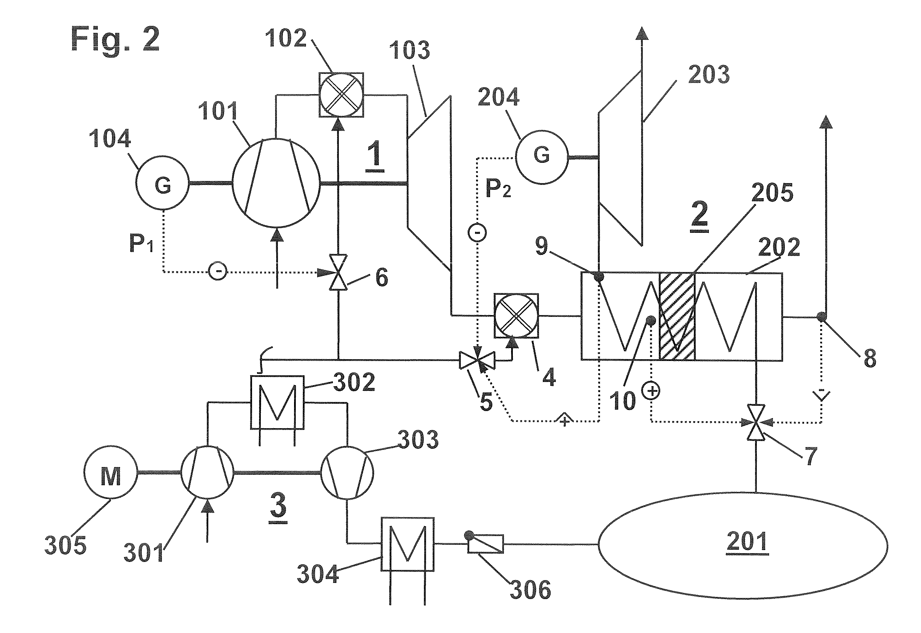

Gemäss einer zweiten Ausführungsform, die in Figur 2 dargestellt ist, ist im Rauchgaspfad der Gasturbogruppe stromauf des Wärmeübertragungsapparates 202 eine Zusatzfeuerung 4 angeordnet.
Ein Brennstoffmassenstrom-Stellorgan 5 der Zusatzfeuerung 4 wird mit der Leistung P₂ des Generators 204 der Druckspeicher-Entspannungsturbine 203 als Regelgrösse gesteuert. Eine Erhöhung der Feuerungsleistung der Zusatzfeuerung führt zunächst zu einem Anstieg der Temperatur am Katalysatoreintritt, und in Folge des oben beschriebenen Temperaturregelungsmechanismus zu einem Anstieg des Massenstroms durch die Druckspeicheranlage. Die dargestellte Ausführungsform weist weiterhin explizit dargestellte Temperaturmessstellen 8 und 9 auf, an denen die Temperatur des Rauchgases am Austritt des Wärmeübertragungsapparates 202 respektive die Temperatur des Speicherfluides am Austritt aus dem Wärmeübertragungsapparat 202 respektive am Eintritt in die Speicherfluid-Entspannungsturbine 203 ermittelt wird. Beide werden im Sinne von Sicherheitsschaltungen als Regelgrössen für Grenzregelungen verwendet. Ein Übersteigen eines zulässigen Maximalwertes der an der Messstelle 9 gemessenen Temperatur begrenzt die Stellung des Brennstoffmassenstrom-Stellorgans 5, oder schliesst dieses wenigstens teilweise. Ein Unterschreiten einer zulässigen Minimaltemperatur an der Messstelle 8 bewirkt eine Begrenzung oder ein Schliessen des Drosselorgans 7. Es ist klar, dass die Regelungsebenen hierarchisch gestuft sein müssen, in dem Sinne, dass eine als Sicherheitsschaltung vorgesehene Grenzregelung Vorrang vor den oben beschriebenen Temperatur- und Leistungsregelungsmechanismen hat.

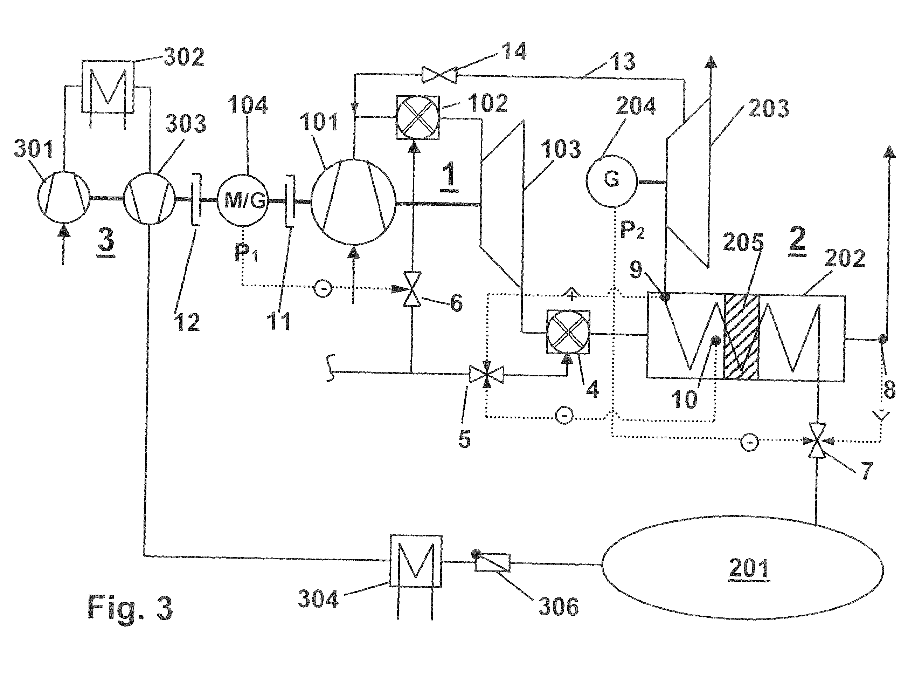

Die gemäss Figur 3 dargestellte Ausführungsform unterscheidet sich hinsichtlich der Regelung dahingehend, dass die Katalysatoreintrittstemperatur als Regelgrösse für das Brennstoffmassenstrom-Stellorgan 5 herangezogen wird, während das Drosselorgan 7 mit der Leistung P₂ als Regelgrösse angesteuert wird. Weiterhin ist die Ladeeinheit 3 mechanisch mit dem Generator 104 der Gasturbogruppe 1 koppelbar. In der dargestellten Ausführungsform ist der Generator 104 vollwertig elektromotorisch betreibbar, und wird insofern in diesem Zusammenhang ganz allgemein als elektrische Maschine oder Motor/Generator-Einheit bezeichnet. Die Verbindung mit der Welle der Gasturbogruppe 1 ist über eine schaltbare Kupplung 11 herstellbar; hier kann auch eine feste Koppelung vorhanden sein. An einem zweiten Wellenende ist die Motor/Generator-Einheit 104 über eine schaltbare Kupplung 12 mit der Ladeeinheit 3 koppelbar. In einem reinen Ladebetrieb ist die Verbindung der Kupplung 12 geschlossen, und die Verbindung der Kupplung 11 geöffnet; die Motor/Generator-Einheit 104 wird rein motorisch betrieben. Im reinen Leistungsbetrieb ist Kupplung 11 geschlossen, und Kupplung 12 geöffnet; die Motor/Generator-Einheit wird von der Gasturbogruppe 1 angetrieben und arbeitet rein generatorisch. Daneben gibt es eine vorteilhafte Betriebsweise, bei dem beide Kupplungen geschlossen sind. Die elektrische Maschine 104 kann dann verschiedene Betriebszustände vom motorischen bis zum generatorischen Betrieb annehmen, und es kann stufenlos zwischen einem Betrieb mit Leistungsaufnahme und einem Betrieb mit Leistungsabgabe variiert werden. Diese Betriebsweise eignet sich ganz hervorragend, um die Phase der elektrischen Maschine 104 zu variieren, und damit in vorzüglicher Weise eine Blindleistungskompensation eines angeschlossenen Elektrizitätsnetzes zu realisieren. Weiterhin weist die Kraftwerksanlage eine Überströmleitung 13 mit einem Absperr- und Drosselorgan 14 auf. Über die Überströmleitung kann Fluid aus dem Druckspeicherprozess abgezweigt und stromab des Verdichters 101 und stromauf der Brennkammer 102 der Gasturbogruppe 1 dieser zugeführt werden. Damit steht für die Verbrennung und Expansion in der Gasturbogruppe ein höherer Massenstrom zur Verfügung, als der Verdichter 101 fördern muss, was weitere Leistungspotenziale erschliesst. In der Figur ist eine Entnahme in einer Zwischenexpansionsstufe des Speicherprozesses dargestellt. Die Wahl der geeigneten Abzweigestelle hängt insbesondere vom nominalen Druckverhältnis der Speicherfluid-Entspannungsturbine 203 ab; der Entnahmedruck soll grösser als der Verdichterenddruck der Gasturbogruppe sein, diesen aber nicht zu sehr überschreiten, damit keine unnötig grossen Drosselungsverluste in Kauf genommen werden müssen. Es ist auch eine Entnahme im Wärmeübertragungsapparat oder zwischen dem Wärmeübertragungsapparat 202 und der Druckspeicher-Entspannungsturbine 203 möglich. Es ist weiterhin von Vorteil, wenn die Entnahmestelle so gewählt ist, dass die Temperatur des entnommenen Fluides wenigstens näherungsweise der Temperatur am Verdichteraustritt der Gasturbogruppe 1 entspricht.

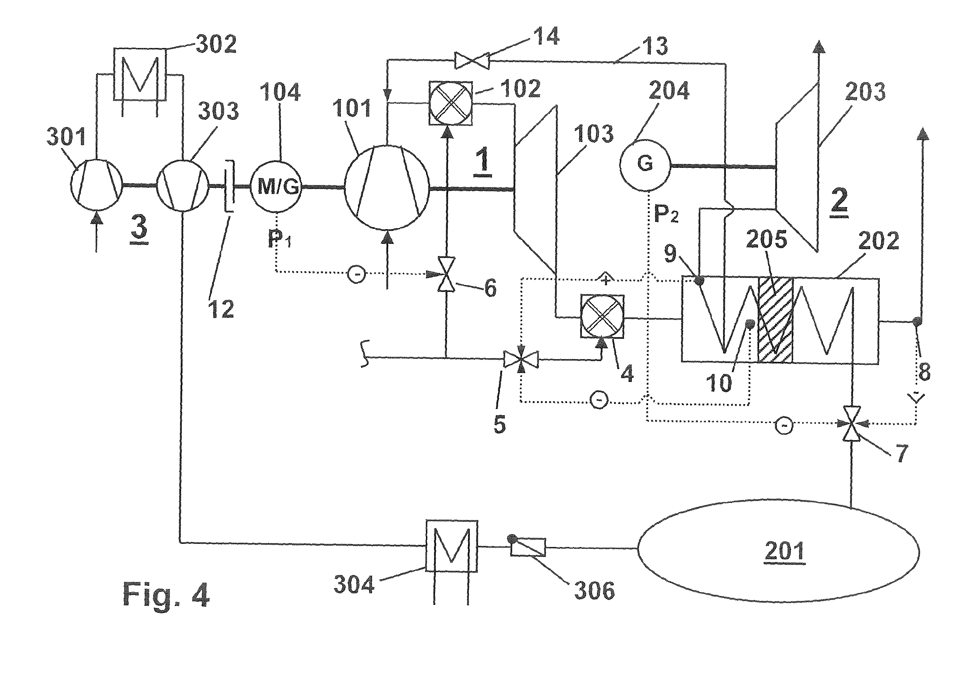

Eine Ausführungsform, bei der die Überströmleitung im Wärmeübertragungsapparat abzweigt, ist in Figur 4 dargestellt. In Strömungsrichtung des Rauchgases ist die Entnahmestelle stromauf des Katalysators angeordnet, derart, dass die Temperatur des Druckspeicherfluides an dieser Stelle im Bereich von bevorzugt 350°C bis 450°C liegt oder, bei hohen Druckverhältnissen der Gasturbogruppe, auch bei 500°C oder darüber. Diese Temperatur ist also im Allgemeinen höher als die Temperatur am Katalysatoreintritt, woraus die dargestellte bevorzugte Anordnung der Entnahmestelle resultiert. Weiterhin ist die elektrische Maschine 104 direkt mit der Welle der Gasturbogruppe gekoppelt. In diesem Fall ist die vollwertige motorische Betriebsfähigkeit der Maschine 104 nicht zwingend erforderlich.

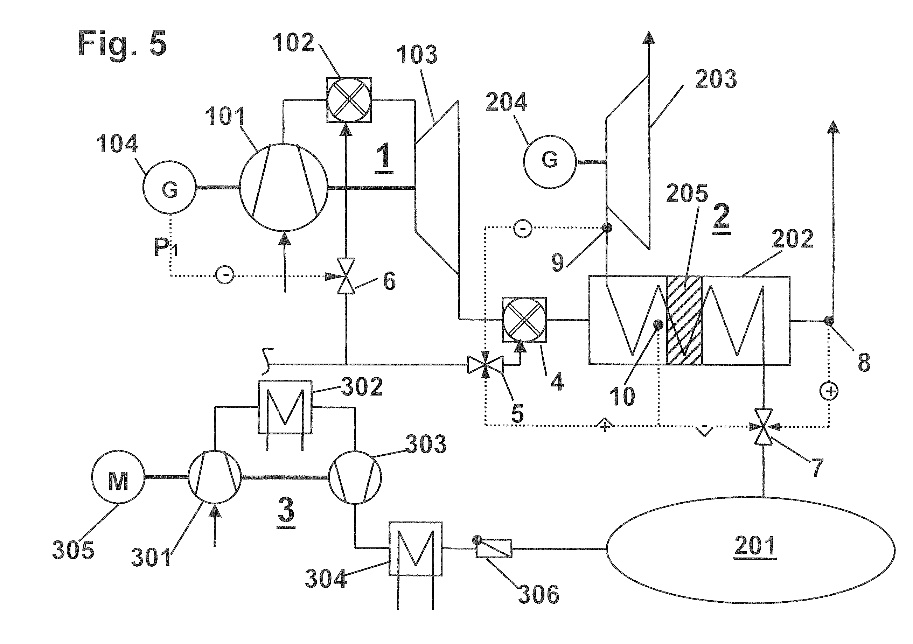

Die folgenden Figuren illustrieren Betriebsweisen der erfindungsgemässen Kraftwerksanlage, bei denen im Interesse einer thermodynamischen Optimierung des auf eine explizite Regelung der Leistungsabgabe der Druckspeicheranlage verzichtet wird. Die Leistungsabgabe der Druckspeicheranlage stellt sich dann in Folge der thermodynamischen Parameter ein.
Dies eignet sich ganz besonders auch in Verbindung mit der in Figur 1 dargestellten Bauart, bei der die Gasturbogruppe 1 und die Expansionsmaschine 203 der Druckspeicheranlage 2 auf einen gemeinsamen Generator wirken.
In der Ausführungsform gemäss Figur 5 wird an einer Temperaturmessstelle 8 die Rauchgastemperatur stromab des Wärmeübertragungsapparates als Abgastemperatur gemessen. An einer Temperaturmessstelle 9 wird eine Temperatur des Speicherfluides am Eintritt in die Speicherfluid-Entspannungsturbine 203 gemessen; äquivalent kann zum Beispiel auch eine Temperatur des Eintrittsflansches gemessen werden. Die Stellung des Brennstoffmassenstrom-Stellorgans 5 der Zusatzfeuerungseinrichtung 4 wird mit der Speicherfluid-Turbineneintrittstemperatur als Regelgrösse angesteuert. Es erfolgt eine Regelung so, dass die Temperatur am Eintritt in die Speicherfluid-Entspannungsturbine 203 immer an einem Maximum gehalten wird; dabei kann wie bereits wiederholt beschrieben eine stetige Regelung oder eine unstetige Regelung, insbesondere eine Zweipunktregelung, Anwendung finden. Auf diese Weise ist das spezifische Enthalpiegefälle über die Speicherfluid-Entspannungsturbine 203 am grössten, und das im Speichervolumen 201 gespeicherte Fluid wird bestmöglich zur Nutzleistungsgewinnung genutzt. Gleichzeitig wird der dem Speichervolumen 201 entnommene Massenstrom über Eingriffe auf die Stellung des Drosselorgans 7 derart eingestellt, dass die Abgastemperatur, die mit der Messstelle 8 gemessen wird, auf einem kleinstzulässigen Wert gehalten wird, der beispielsweise um einen Sicherheitsabstand von 20°C über der Taupunktstemperatur einer Rauchgaskomponente liegt. Die Sicherstellung der möglichst geringen Abgastemperatur stellt möglichst geringe Abgas-Wärmeverluste und eine bestmögliche Nutzung der Rauchgaswärme sicher. Eine Temperaturüberwachung des Katalysators 205 geschieht mit der Temperaturmessstelle 10. Wenn dort eine Temperatur beobachtet wird, welche eine im Interesse der Systemintegrität zulässige Obergrenze überschreitet, wird im Sinne einer Grenzregelung auf das Brennstoffmassenstrom-Stellorgan 5 eingegriffen, und dessen Öffnung begrenzt, oder das Stellorgan wird sogar ein Stück geschlossen. Im Interesse einer Schutzschaltung hat dieser Regeleingriff selbstverständlich Vorrang vor der Regelung der Speicherfluid-Turbineneintrittstemperatur. Wenn die Temperatur an der Messstelle 10 unter einen Wert sinkt, der eine mindeste Reinigungsfunktion des Katalysators zu gewährleisten vermag, wird der Speicherfluidmassenstrom vermindert, und damit die Rauchgas-Temperaturabsenkung vom Eintritt des Wärmeübertragungsapparates bis zum Katalysator vermindert, und in der Konsequenz die Katalysatortemperatur wieder angehoben. Im Gegenzug steigt auch die Temperatur an der Messtelle 8 und damit die Abgaswärmeverluste; im Interesse einer Schutzschaltung hat die Grenzregelung der Katalysatortemperatur aber Vorrang. Wie deutlich ersichtlich, ist die Grenzregelung der Katalysatortemperatur so realisiert, dass Regeleingriffe immer auf die sichere Seite im Interesse der Integrität der Gesamtanlage erfolgen; es werden zwar die thermodynamischen Daten verschlechtert, was aber reversibel ist, und die Schutzeingriffe können nicht zu schädlichen Folgen an anderen Komponenten der Kraftwerksanlage führen. Es wird dieser Betrieb als speicherfluidnutzungs- und abgaswärmeoptimierter Betrieb bezeichnet. Die Leistung der Druckspeicheranlage ergibt sich aus dem sich einstellenden spezifischen Enthalpiegefälle über die Druckspeicher-Entspannungsturbine 203 und dem Massenstrom des Speicherfluides.
Es wäre prinzipiell auch möglich, die Temperatur an der Messstelle 9 durch eine Veränderung des Speicherfluid-Massenstroms mit der Stellung des Drosselorgans 7 als Stellgrösse zu regeln, und umgekehrt die Abgastemperatur an der Messstelle 8 durch Eingriffe auf das Brennstoffmassenstrom-Stellorgan zu regeln. Es ist aber leicht ersichtlich, dass die Dynamik der Regelstrecken bei dem im Zusammenhang mit Figur 5 beschriebenen Beispiel wesentlich einfacher zu überblicken ist, weshalb die dort vorgeschlagene Regelung die bevorzugte ist.

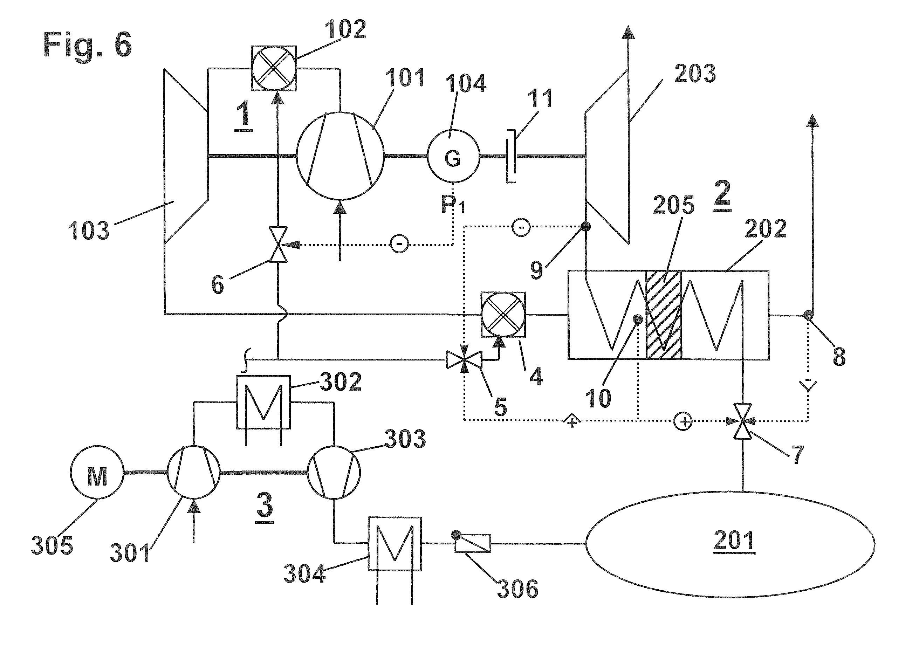

Gemäss dem in Figur 6 dargestellten Ausführungsbeispiel wird die Temperatur des Speicherfluides am Eintritt in die Turbine 203, gemessen mit der Messstelle 9, geregelt, wobei die Stellung des Brennstoffmassenstrom-Stellorgans die Stellgrösse ist, und gleichzeitig wird die Katalysatortemperatur oder die Rauchgastemperatur stromauf des Katalysators, gemessen mit der Messstelle 10, geregelt, wobei die Stellung des Speicherfluid-Massenstromstellorgans 7 die Stellgrösse ist. Gleichzeitig sind im Sinne von Schutzschaltungen Grenzregelungen der Katalysatortemperatur oder der Rauchgastemperatur stromauf des Katalysators, sowie der an der Messstelle 8 erfassten Abgastemperatur realisiert. Eine Begrenzung der Stellung des Brennstoffmassenstrom-Stellorgans 5 mit der Temperatur der Messstelle 10 als Regelgrösse verhindert eine Überhitzung des Katalysators 205. Eine Begrenzung der Stellung des Stellorgans 7 mit der Abgastemperatur als Regelgrösse verhindert eine Taupunktsunterschreitung im Rauchgas stromab des Wärmeübertragungsapparates. Diese Regelung gewährleistet ein maximales spezifisches Enthalpiegefälle über die Druckspeicher-Entspannungsturbine 203 und gleichzeitig eine bestmögliche Katalysatorwirkung. Demgemäss wird dieser Betrieb als speicherfluidnutzungsund katalysatoroptimierter Betrieb bezeichnet.

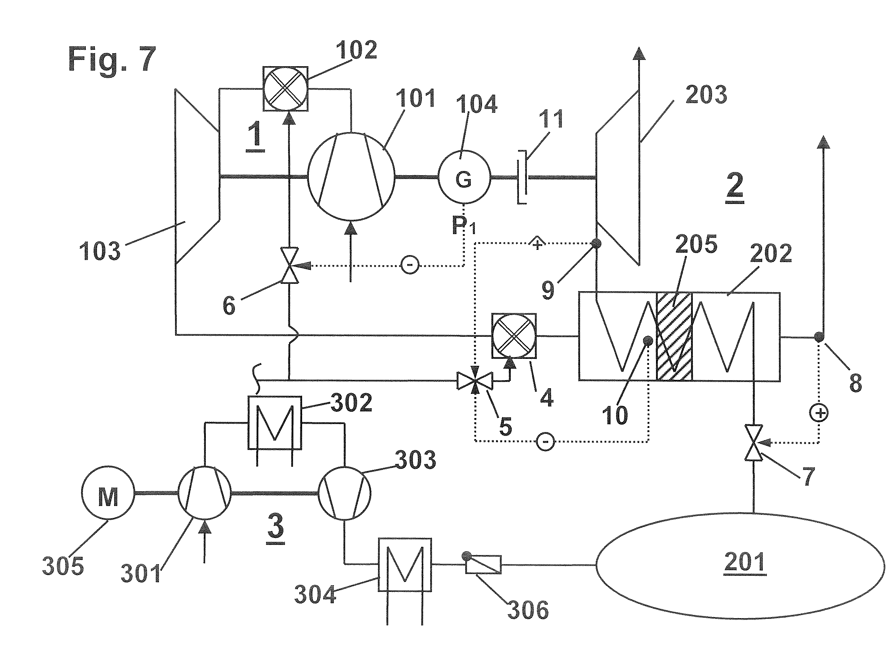

Gemäss Figur 7 wird die Temperatur an der Messstelle 10 mit der Stellung des Brennstoffmassenstrom-Stellorgans 5 der Zusatzfeuerungseinrichtung 4 als Stellgrösse geregelt. Die Abgastemperatur wird mit der Stellung des Drosselorgans 7 als Stellgrösse geregelt. Damit ist es möglich, gleichzeitig eine optimale Katalysatortemperatur und eine möglichst geringe Abgastemperatur einzustellen. Dies wird als der katalysator- und abgaswärmeoptimierte Betrieb bezeichnet. Es ist weiterhin eine Grenzregelung der Speicherfluid-Turbineneintrittstemperatur, gemessen mit der Messstelle 9, vorgesehen, indem gegebenenfalls die Öffnung des Brennstoffmassenstrom-Stellorgans 5 im Sinne einer Schutzschaltung begrenzt wird.

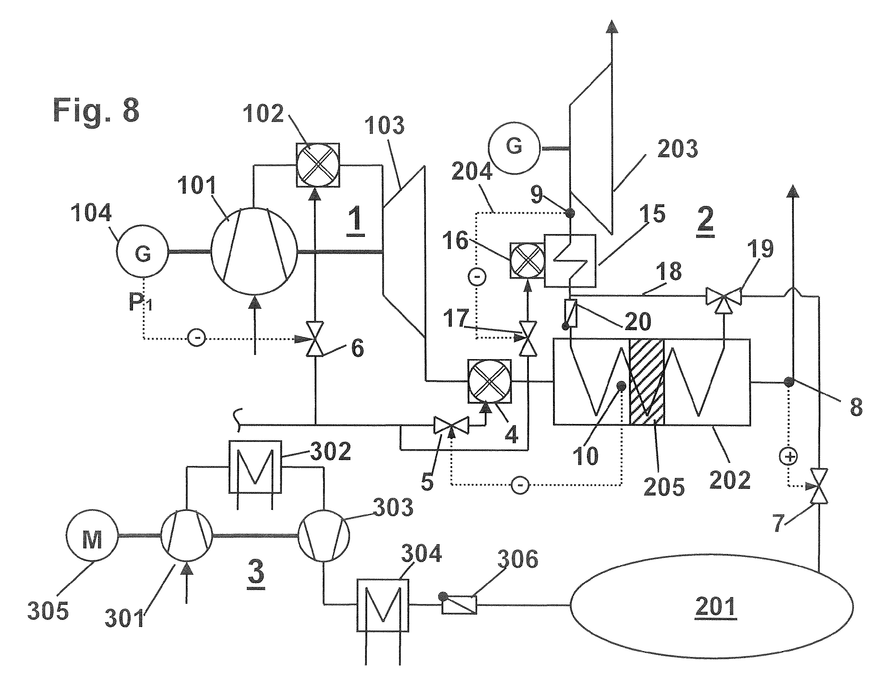

Bei der Ausführungsform gemäss Figur 8 ist stromab des Wärmeübertragungsapparates 202 ein Wärmetauscher 15 mit einer externen Feuerung 16 im Strömungsweg des Speicherfluides angeordnet. Selbstverständlich kann hier auch eine Feuerungseinrichtung unmittelbar im Speicherfluid-Strömungsweg angeordnet sein; dies hat jedoch wie oben mehrfach erwähnt, Folgen für den Betrieb oder die Auswahl der nachgeordneten Speicherfluid-Expansionsmaschine. Im Ausführungsbeispiel wird die Brennstoffzufuhr zu der externen Feuerung 16 mittels Eingriffen auf das Brennstoffmassenstrom-Stellorgan 17 auf eine Konstanthaltung der Eintrittstemperatur der Speicherfluid-Expansionsmaschine 203 geregelt. Die Steuerung der Brennstoffzufuhr zur Rauchgas-Zusatzfeuerung und des Speicherfluid-Massenstroms erfolgen auf oben beschriebene Weise, mit der Katalysatortemperatur oder Katalysator-Eintrittstemperatur sowie der Abgastemperatur als Regelgrössen. Weiterhin ist eine Nebenschlussleitung 18 des Speicherfluid-Strömungsweges angeordnet. Mittels des Wegeventils 19 kann das Speicherfluid-Massenstrom wahlweise durch die Sekundärseite des Wärmeübertragungsapparates 202 oder durch die Nebenschlussleitung geleitet werden. Ein Rückschlagorgan 20 verhindert ein Rückströmen des über die Nebenschlussleitung 18 geführten Fluides in den Wärmeübertragungsapparat 202. Dies verleiht der Anlage ganz hervorragende Not-Stromerzeugungseigenschaften: Beim Ausfall der Gasturbogruppe 1 wird Speicherfluid zur Speicherfluid-Expansionsmaschine 203 geleitet. Damit ist die Expansionsmaschine in der Lage, den Generator 204 anzutreiben, und somit kann Strom erzeugt werden. Bei einem Ausfall des Wärmeübertragungsapparates 202 kann eine Wärmezufuhr zum Speicherfluid in dem Wärmetauscher 15 erfolgen; dies erhöht das spezifische Enthalpiegefälle über die Turbine 203 und damit die Ausnutzung des gespeicherten Fluides. Die Leitung des Fluides durch die Nebenschlussleitung 28 verringert einerseits die Druckverluste im Strömungsweg. Auf der anderen Seite kann das gespeicherte Fluid auch dann genutzt werden, wenn der Strömungsweg über den Wärmeübertragungsapparat 202 zum Beispiel infolge einer Grosshavarie der Gasturbogruppe nicht verfügbar ist. Es soll nicht unerwähnt bleiben, dass, sofern Fluid im Speicher 201 gespeichert ist, die Druckspeicher-Expansionsturbine 203 nur durch Öffnen des Drosselorgans 7 und Beaufschlagen der Turbine 203 mit unter Druck stehendem Speicherfluid ohne Hilfsenergie angefahren werden kann. Mit höchstem Vorteil sind die Stellorgane 7 und 17 bei einer solchen Anlage derart ausgeführt, dass eine Handbetätigung möglich ist.

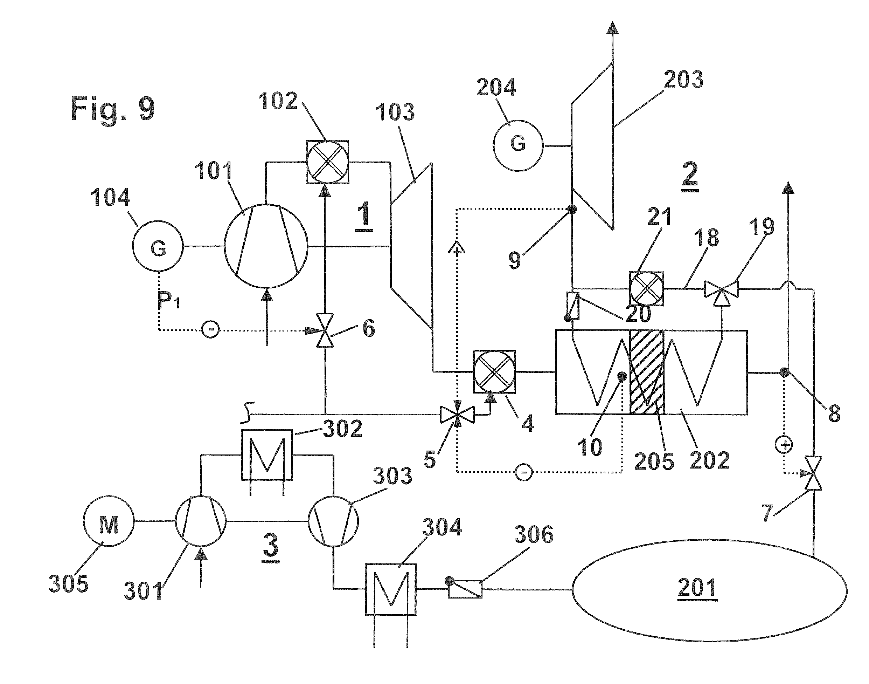

Gemäss Figur 9 ist eine Ausführungsform der Erfindung dargestellt, bei welcher die Speicherfluid-Zusatzerhitzungsvorrichtung als in der Nebenschlussleitung 18 angeordneter Nebenschlussbrenner 21 ausgeführt ist. Selbstverständlich kann hier auch eine indirekte Feuerung angeordnet sein, mit den beschriebenen Vorteilen. Eine dargestellte direkte Befeuerung mittels eines Nebenschlussbrenners ist jedoch wesentlich weniger kapitalintensiv zu realisieren. Unter der Prämisse, dass die Nebenschlussleitung und der Nebenschlussbrenner in erster Linie der Vorhaltung von Noteigenschaften dienen, ist hier beispielsweise die Verwendung eines sehr einfachen Rohrbrenners eine durchaus vorteilhafte Variante.
Zu erwähnen sei in diesem Zusammenhang, dass es auch möglich ist, die Nebenschlussleitung ohne weitere Massnahmen zur Wärmezufuhr zum Speicherfluid anzuordnen. Obschon dies in einer wie beschrieben schlechteren Ausnutzung des gespeicherten Fluides resultiert, kann die Speicheranlage dennoch als "stand alone" Lösung eine notfallmässige Stromversorgung sicherstellen, solange der Druckspeicher 201 unter Druck steht.

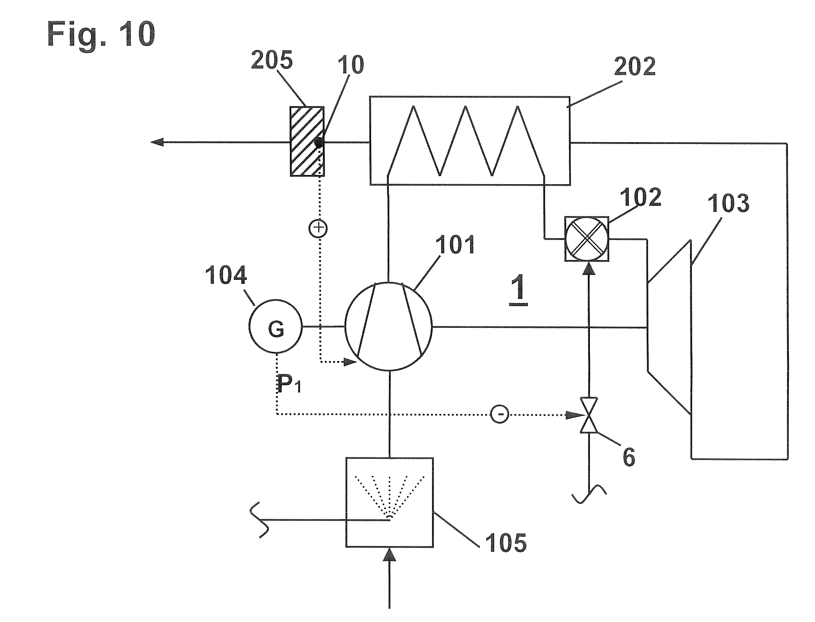

Die Ausführungsform gemäss Figur 10 zeigt eine weitere, sehr einfache Ausführungsform der Erfindung. Diese ist vor allem in Verbindung mit Gasturbogruppen geeignet, welche aufgrund eines vergleichsweise niedrigen Druckverhältnisses von 12 oder 15 und weniger und/oder aufgrund der Anwendung von Massnahmen zur Kühlung während der Verdichtung oder zwischen zwei Verdichtungsschritten niedrige Verdichterendtemperaturen von zum Beispiel 250°C bis 350°C aufweisen. Bei der dargestellten Gasturbogruppe 1 wird in einer Zerstäubungsvorrichtung 105 eine Flüssigkeit in die vom Verdichter 101 angesaugte Luft eingedüst. Die Wassertropfen verdunsten während der Verdichtung, und vermindern damit den Temperaturanstieg während der Verdichtung. Die verdichtete Luft durchströmt den sekundärseitigen Strömungsweg eines Wärmeübertragungsapparates 202 und wird dabei im Wärmetausch mit dem primärseitig strömenden Heissgas der Gasturbogruppe erwärmt. Die erwärmte Luft strömt in die Brennkammer 102 ein. Dort wird auf an sich bekannte Weise Brennstoff zugemischt und verbrannt; die gespannten Heissgase werden in der Turbine 103 arbeitsleistend entspannt. Die entspannten Rauchgase strömen mit immer noch hoher Temperatur in den Wärmetauscher 202 ein, durchströmen dessen primärseitigen Strömungsweg, und werden im Wärmetausch mit der sekundärseitig strömenden Luft auf eine Temperatur abgekühlt, welche der Funktion eines Katalysators zuträglich ist, zum Beispiel auf rund 270°C bis 370°C. Die Rauchgase durchströmen einen Rauchgasreinigungskatalysator 205, werden dabei von unerwünschten Komponenten gereinigt, und strömen als Abgas in die Atmosphäre ab. In einer weiteren Ausführungsform kann im Rauchgasströmungsweg stromab des Katalysators ein weiterer Wärmetauscher angeordnet sein, in dem die verbleibende Abgaswärme genutzt wird. Eine Messstelle 10 misst die Katalysatortemperatur. Mit dieser Temperatur als Regelgrösse wird über einen Temperaturregler die Stellung einer nicht dargestellten, dem Fachmann aber geläufigen verstellbaren Vorleitreihe des Verdichters 101 gesteuert, welche in erster Linie den Massenstrom der Gasturbogruppe bestimmt. Unabhängig davon wird in bekannter Weise über einen Leistungsregler die Stellung des Brennstoffmassenstrom-Stellorgans 6 gesteuert. Die dargestellte Anordnung ermöglicht es ebenfalls, die Temperatur des Katalysators auf einen Sollwert oder innerhalb eines Sollwertintervalls einzuregeln.

Die vorstehenden Ausführungsbeispiele vermitteln dem Fachmann einen instruktiven Einblick in die Vielfalt der im Rahmen der Erfindung möglichen Ausgestaltungen und Betriebsmodi einer Kraftwerksanlage der eingangs genannten Art, wobei die dargestellten Ausführungsbeispiele nicht erschöpfend sein sollen und können. Insbesondere können Ausgestaltungsmerkmale der beschriebenen Ausführungsbeispiele nahezu beliebig untereinander kombiniert werden. Die unterschiedlichen beschriebenen Regelungsmechanismen können in einer einzigen Anlage miteinander kombiniert werden, und es kann zwischen den unterschiedlichen Betriebs- und Regelungsmodi gewechselt werden, auch während des Betriebes.

### Bezugszeichenliste

- 1: Gasturbogruppe
- 2: Druckspeicheranlage
- 3: Ladeeinrichtung für Druckspeicher
- 4: Rauchgas-Wärmezuführeinrichtung, Zusatzfeuerung
- 5: Brennstoffmassenstrom-Stellorgan
- 6: Brennstoffmassenstrom-Stellorgan
- 7: Absperr- und/oder Drosselorgan, Speicherfluid-Massenstromstellorgan
- 8: Temperaturmessstelle, für Abgastemperatur
- 9: Temperaturmessstelle, für Speicherfluidtemperatur stromab des Erhitzers und/oder am Eintritt in die Druckspeicher-Entspannungskraftmaschine
- 10: Temperaturmessstelle, für Rauchgastemperatur stromauf eines Katalysators oder für Katalysatortemperatur
- 11: Kupplung
- 12: Kupplung
- 13: Überströmleitung
- 14: Absperr- und/oder Drosselorgan
- 15: Speicherfluid-Zusatzerwärmungsvorrichtung, Wärmetauscher
- 16: externe Feuerung
- 17: Brennstoffmassenstrom-Stellorgan
- 18: Nebenschlussleitung
- 19: Wegeventil
- 20: Rückschlagorgan
- 21: Speicherfluid-Zusatzerwärmungsvorrichtung, Speicherfluid-Zusatzfeuerungseinrichtung, Nebenschluss-Brenner
- 101: Verdichter
- 102: Brennkammer
- 103: Turbine
- 104: elektrische Maschine, Motor/Generator-Einheit, Generator
- 105: Zerstäubungsvorrichtung
- 201: Speichervolumen
- 202: Wärmeübertragungsapparat
- 203: Speicherfluid-Entspannungskraftmaschine, Speicherfluid-Entspannungsturbine
- 204: Generator
- 205: Katalysator
- 301: Verdichter
- 302: Kühler und Entfeuchter
- 303: Verdichter
- 304: Kühler und Entfeuchter
- 305: Antriebsmotor
- 306: Rückschlagorgan

- P₁: Generatorleistung der Gasturbogruppe
- P₂: Generatorleistung der Druckspeicheranlage

## Patentansprüche

1. Kraftwerksanlage, umfassend eine Gasturbogruppe (1), mit wenigstens einem Verdichter (101), wenigstens einer stromab des Verdichters angeordneten Brennkammer (102), sowie wenigstens einer stromab der Brennkammer angeordneten Turbine (103),
in welcher Kraftwerksanlage stromab der ersten Turbine ein Wärmeübertragungsapparat (202) angeordnet ist, welcher primärseitig im Rauchgaspfad der Turbine angeordnet ist,
und welcher sekundärseitig in einem Arbeitsfluid-Strömungsweg für ein gasförmiges Arbeitsfluid angeordnet ist,
**dadurch gekennzeichnet, dass** im Rauchgaspfad der Gasturbogruppe stromab wenigstens eines ersten Teils des Wärmeübertragungsapparates ein Rauchgasreinigungskatalysator (205) angeordnet ist.

2. Kraftwerksanlage gemäss Anspruch 1, **dadurch gekennzeichnet, dass** der Wärmeübertragungsapparat ein Rekuperator zur Luftvorwärmung einer Gasturbogruppe ist, indem der sekundärseitige Strömungsweg im Strömungsweg vom Verdichter der Gasturbogruppe zur Brennkammer der Gasturbogruppe angeordnet ist.

3. Kraftwerksanlage gemäss Anspruch 2, **dadurch gekennzeichnet, dass** der Katalysator im Rauchgaspfad der Gasturbogruppe am stromabwärtigen Ende des Rekuperators oder stromab des Rekuperators angeordnet ist.

4. Kraftwerksanlage gemäss Anspruch 2, **dadurch gekennzeichnet, dass** der Katalysator im Rauchgaspfad der Gasturbogruppe innerhalb des Rekuperators, stromab eines ersten Teils des Rekuperators und stromauf eines zweiten Teils des Rekuperators, angeordnet ist.

5. Kraftwerksanlage gemäss einem der Ansprüche 2 bis 4, **dadurch gekennzeichnet, dass** stromab des Rekuperators und stromab des Katalysators ein weiterer Wärmeübertragungsapparat, insbesondere ein Lufterhitzer einer Luftspeicheranlage, angeordnet ist.

6. Kraftwerksanlage gemäss Anspruch 1, weiterhin umfassend einen Druckspeicher (201), und wenigstens eine Speicherfluid-Entspannungskraftmaschine (203), wobei der Wärmeübertragungsapparat (202) sekundärseitig in einem von dem Druckspeicher (201) zu der Speicherfluid-Entspannungskraftmaschine (203) führenden Fluidströmungsweg angeordnet ist, **dadurch gekennzeichnet, dass** der Katalysator (205) im Rauchgaspfad der Gasturbogruppe innerhalb des Wärmeübertragungsapparates (202), stromab eines ersten Teils des Wärmeübertragungsapparates und stromauf eines zweiten Teils des Wärmeübertragungsapparates, angeordnet ist.

7. Kraftwerksanlage gemäss Anspruch 6, weiterhin umfassend: wenigstens eine Temperaturmessvorrichtung (10) zur Bestimmung der Rauchgastemperatur am Katalysatoreintritt und/oder der Katalysatortemperatur;
ein im Fluidströmungsweg zwischen dem Druckspeicher (201) und der Speicherfluid-Entspannungskraftmaschine (203) angeordnetes Absperr- und/oder Drosselorgan (7);
**dadurch gekennzeichnet, dass** ein Temperaturregler mit der Rauchgastemperatur am Katalysatoreintritt und/oder der Katalysatortemperatur als Regelgrösse und der Stellung des Absperr- und/oder Drosselorgans als Stellgrösse beschaltet ist.

8. Kraftwerksanlage gemäss Anspruch 6, weiterhin umfassend: wenigstens eine Temperaturmessvorrichtung (8) zur Bestimmung der Abgastemperatur im Rauchgaspfad stromab der Wärmeübertragungsvorrichtung (202);
ein im Fluidströmungsweg zwischen dem Druckspeicher (201) und der Speicherfluid-Entspannungskraftmaschine (203) angeordnetes Absperr- und/oder Drosselorgan (7);
**dadurch gekennzeichnet, dass** ein Temperaturregler mit der Abgastemperatur als Regelgrösse und der Stellung des Absperr- und/oder Drosselorgans (7) als Stellgrösse beschaltet ist.

9. Kraftwerksanlage gemäss einem der Ansprüche 6 bis 8, **dadurch gekennzeichnet, dass** im Rauchgaspfad der Gasturbogruppe stromauf des Wärmeübertragungsapparates (202) eine Wärmezuführeinrichtung (4), insbesondere eine Zusatzfeuerungseinrichtung, angeordnet ist.

10. Kraftwerksanlage gemäss Anspruch 9, weiterhin umfassend: wenigstens eine Temperaturmessvorrichtung (10) zur Bestimmung der Rauchgastemperatur am Katalysatoreintritt und/oder der Katalysatortemperatur;
**dadurch gekennzeichnet, dass** ein Temperaturregler mit der Rauchgastemperatur am Katalysatoreintritt und/oder der Katalysatortemperatur als Regelgrösse und der Stellung eines Brennstoffmassenstrom-Stellorgans (5) der Wärmezuführeinrichtung (4) als Stellgrösse beschaltet ist.

11. Kraftwerksanlage gemäss Anspruch 9, **dadurch gekennzeichnet, dass** ein Leistungsregler der Speicherfluid-Entspannungskraftmaschine mit der Stellung eines Brennstoffmassenstrom-Stellorgans (5) der Wärmezuführeinrichtung (4) als Stellgrösse beschaltet ist.

12. Kraftwerksanlage gemäss Anspruch 9, weiterhin umfassend: Mittel (9) zur Bestimmung der Speicherfluidtemperatur stromab des Wärmeübertragungsapparates (202), **dadurch gekennzeichnet, dass** ein Temperaturregler mit der Speicherfluidtemperatur als Regelgrösse und der Stellung eines Brennstoffmassenstrom-Stellorgans (5) der Wärmezuführeinrichtung (4) als Stellgrösse beschaltet ist.

13. Kraftwerksanlage gemäss einem der Ansprüche 6 bis 12, **dadurch gekennzeichnet, dass** im Speicherfluid-Strömungsweg stromab des Wärmeübertragungsapparates (202) und stromauf der Speicherfluid-Entspannungskraftmaschine (203) eine weitere Speicherfluid-Wärmezuführvorrichtung (15, 16; 20) angeordnet ist.

14. Kraftwerksanlage gemäss Anspruch 13, weiterhin umfassend: Mittel (9) zur Bestimmung der Speicherfluidtemperatur stromab der weiteren Speicherfluid-Wärmezuführeinrichtung (15, 16; 20), **dadurch gekennzeichnet, dass** ein Temperaturregler mit der Speicherfluidtemperatur als Regelgrösse und der Stellung eines Brennstoffmassenstrom-Stellorgans (17) der weiteren Speicherfluid-Wärmezuführeinrichtung als Stellgrösse beschaltet ist.

15. Kraftwerksanlage gemäss Anspruch 13, **dadurch gekennzeichnet, dass** ein Leistungsregler der Druckspeicher-Expansionsturbine (203) mit der Stellung eines Brennstoffmassenstrom-Stellorgans (17) der weiteren Wärmezuführeinrichtung (15, 16; 20) als Stellgrösse beschaltet ist.

16. Kraftwerksanlage gemäss einem der vorstehenden Ansprüche, **gekennzeichnet durch** Mittel zur Regelung der Temperatur des Katalysators und/oder der Rauchgastemperatur am Eintritt in den Katalysator.

17. Verfahren zum Betrieb einer Kraftwerksanlage gemäss einem der vorstehenden Ansprüche, umfassend den Schritt, die Temperatur des Katalysators und/oder die Rauchgastemperatur am Eintritt in den Katalysator zu regeln.
